Europäisches Patentamt

European Patent Office

Office européen des brevets

(19)

(11) **EP 0 464 425 B1**

(12) **EUROPÄISCHE PATENTSCHRIFT**

(45) Veröffentlichungstag und Bekanntmachung des Hinweises auf die Patenterteilung:
**15.04.1998 Patentblatt 1998/16**

(51) Int Cl.6: **H04Q 7/38**, H04B 7/26

(21) Anmeldenummer: **91109787.1**

(22) Anmeldetag: **14.06.1991**

(54) **Verfahren zum Einordnen und Auffinden von Datensätzen in einer Teilnehmerdatenbank**

Method for filing and retrieving data sets in a subscriber database

Procédé pour le classement et la localisation d'ensembles de données dans une base de données d'abonnés

(84) Benannte Vertragsstaaten:
**AT BE CH DE DK ES FR GB IT LI NL SE**

(30) Priorität: **06.07.1990 DE 4021632**

(43) Veröffentlichungstag der Anmeldung:
**08.01.1992 Patentblatt 1992/02**

(73) Patentinhaber:
• **ALCATEL ALSTHOM COMPAGNIE GENERALE D'ELECTRICITE**
**75008 Paris (FR)**
Benannte Vertragsstaaten:
**DE**
• **ALCATEL N.V.**
**NL-1077 XX Amsterdam (NL)**
Benannte Vertragsstaaten:
**BE CH DK ES FR GB IT LI NL SE AT**

(72) Erfinder: **Pfundstein, Matthias Jörg, Dr.**
**W-7000 Stuttgart 1 (DE)**

(74) Vertreter: **Pohl, Herbert, Dipl.-Ing. et al**
**Alcatel Alsthom,**
**Intellectual Property Department,**
**P.O. Box 30 09 29**
**70449 Stuttgart (DE)**

(56) Entgegenhaltungen:
**EP-A- 0 117 906**

• **TELECOMMUTANT Juni 1988, Seiten 33 - 52; BALLARD ET AL.: 'Le Système Radio-Mobile ECR900'**
• **PROCEDINGS OF THE 1988 INTERNATIONAL CONFERENCE ON PARALLEL PROCESSING Bd. 3, August 1988, NEW YORK,US Seiten 76 - 83; SAKTI ET AL.: 'Generalized Parallel Processing Models for Database Systems'**
• **THE 7TH ANNUAL SYMPOSIUM ON COMPUTER ARCHITECTURE Mai 1980, LONG BEACH,US Seiten 218 - 227; AHUJA ET AL.: 'An Associative/Parallel Processor for Partial Match Retrieval Using Superimposed codes'**
• **SIXTH INTERNATIONAL CONFERENCE ON VERY LARGE DATA BASES Oktober 1980, NEW YORK, US Seiten 212 - 223; LITWIN: 'Linear Hashing: A new Tool for File and Table Addressing'**
• **COMMUNICATIONS OF THE ASSOCIATION FOR COMPUTING MACHINERY. Bd. 16, Nr. 10, Oktober 1973, NEW YORK US Seiten 603 - 612; LUM: 'General Performance Analysis of Key-to-Address Transformation Methods Using an Abstract File Concept'**

**Beschreibung**

Die Erfindung betrifft ein Verfahren zum Einordnen und Auffinden von Datensätzen, insbesondere von Teilnehmerdatensätzen in Teilnehmerdatenbanken, wie z.B. bei Mobilfunksystemen.

In üblichen Telefonvermittlungsstellen ist die Fluktuation von Teilnehmern nur gering und im wesentlichen bestimmt durch Ortswechsel der Teilnehmer. Dadurch ist die Fluktuation von Teilnehmerdaten in den zugehörigen Teilnehmerdatenbanken ebenfalls gering. Bei Mobilfunksystemen ist das völlig anders. Zwar sind die Teilnehmerdaten von Mobilfunkteilnehmern dort, wo die Mobilfunkstationen gemeldet sind, in einem sogenannten Home Location Register (HLR) gespeichert, doch ist im allgemeinen nicht damit zu rechnen, daß ein Mobilfunkteilnehmer sich ständig im Funkeinzugsbereich derselben Vermittlungsstelle aufhält, in der seine Teilnehmerdaten gespeichert sind. Vielmehr ist denkbar, daß ein Mobilfunkteilnehmer weit entfernt von seinem Wohnort, u.U. in einem anderen Land, eine Telefonverbindung mit einem ebenfalls reisenden anderen Mobilfunkteilnehmers aufbauen will. Um derartige Verbindungen zu ermöglichen, ist das Gebiet, in dem das Mobilfunksystem betrieben werden soll, mit einer Reihe von Mobilfunkvermittlungsstellen (MSC = Mobile Switch Center) überzogen. Im Gegensatz zu Datenbanken üblicher Telefonvermittlungsstellen müssen die Datenbanken von Mobilfunkvermittlungsstellen, sogenannte Visitors Location Register (VLR) auch bei hoher Teilnehmerfluktuation noch sinnvoll arbeiten.

Die Erfindung geht nun von solch einem Mobilfunksystem aus, wie es beispielsweise in dem Artikel" Le Systeme Radio-Mobile ECR 900" von Ballard et al., aus der Zeitschrift Telecommutant, Seiten 33-52, beschrieben ist.

Bei diesem Mobilfunksystem ist jedem Teilnehmer eine Teilnehmernummer zugeordnet. Diese Teilnehmernummer dient zur Identifizierung des Teilnehmers gegenüber der Mobilfunkvermittlungsstelle und dem Auffinden des Teilnehmerdatensatzes des jeweiligen Teilnehmers. Neben der eigentlichen Teilnehmernummer, auch IMSI (International Mobile Subscriber Identity) genannt, ist eine temporäre Teilnehmernummer vorgesehen, die TMSI (Temporary Mobile Subscriber Identity) genannt wird. Diese temporäre Teilnehmernummer wird für die Dauer des Aufenthalts eines Teilnehmers für die Kommunikation mit dem Teilnehmer erzeugt, um die IMSI nicht über die Luftschnittstelle bekanntgeben zu müssen.

Über das Verfahren, wie mittels einer solchen Teilnehmernummer der Teilnehmerdatensatz des jeweiligen Teilnehmers in der Teilnehmerdatenbank aufgefunden wird, ist in diesem Artikel jedoch nichts ausgesagt.

Aus EP - A2 - 0 1 17 906 ist weiter ein Verfahren zur Organisation von Datensätzen in einer Datenbank bekannt, dessen Datenstruktur aus zwei Ebenen besteht: Ein Schlüssel (Key) dient hierbei zur Identifizierung eines einzigen Datensatzes und stellt somit eine Zuordnung eines einzigen Datensatzes dar. Eine "Hashing"-Funktion beschreibt eine Abbildungsfunktion, die einem Schlüssel diejenige Speicherzelle zuordnet, in der der ihm zugeordnete Datensatz abgespeichert ist.

Aus dem Artikel "Generalized Parallel Processing Module for Database Systems", Proceeding of the 1988 International Conference on Parallel Processing, Mod. 3, August 1988, New York, US, Seiten 76-83, ist weiter ein Verfahren bekannt, bei dem die Verwaltung von Daten mittels mehrerer paralleler Zugriffspunkte erfolgt. Bei solchen Zugriffspunkten handelt es sich um Speichermodule oder Plattenlaufwerke. Die Daten werden mittels eines Verteilalgorithmus auf die Zugriffspunkte verteilt, die dann lokale Zugriffstrukturen, beispielsweise Index-Dateien oder Hash-Dateien erzeugen. Die Zuteilung von Speicherbereichen zu diesen recht hardware-nahen Zugriffspunkten ist hierbei fix, es besteht eine direkte Zuordnung von Daten zu Zugriffspunkten.

Diese bekannten Verfahren zur Organisation von Datensätzen sind jedoch nicht für die speziellen Anforderungen an die Teilnehmerdatenverwaltung eines Mobilfunksystems konzipiert und somit für solche eine Anwendung nicht vorteilhaft.

Aufgabe der Erfindung ist es daher, eine robuste Teilnehmerdatenbank für die Verwaltung von Teilnehmerdatensätzen mit hoher Fluktuation so zu organisieren, daß das Einordnen und Auffinden der Teilnehmerdatensätze trotz der hohen Fluktuation wenig Zeit kostet, daß, im Falle von Mobilvermittlungssystemen, die Verbindungen in möglichst kurzer Zeit aufgebaut werden. Gelöst wird diese Aufgabe durch ein Verfahren mit der Merkmalskombination des Hauptanspruches.

Das erfindungsgemäße Verfahren hat den Vorteil, eine beliebig große Teilmenge von Teilnehmerdatensätzen aus einer beliebig großen Teilnehmermenge auf einen der Teilmenge angemessenen Speicherbereich gleichmäßig zu verteilen. Ein weiterer Vorteil liegt in der hohen Frequenz, mit der Teilnehmerdatensätze neu eingetragen werden oder gelöscht werden können, beispielsweise zwei pro Sekunde pro 10 000 Datensätze. Auch ist die Zugriffszeit auf freie Plätze für Neueinträge sowie die Zugriffszeit auf bereits bestehende Datensätze unabhängig von der Ausbaugröße der Datenbank und beträgt durchschnittlich, bei einer Speicherauslastung von ca. 80%, 4 bis 6 Suchschritte. Ein weiterer Vorteil ist darin zu sehen, daß unabhängig von der Systemschnittstelle der Zugriff auf jeden Teilnehmerdatensatz möglich ist. Ein weiterer Vorteil des erfindungsgemäßen Verfahrens liegt darin, daß die Datenbank während des laufenden Betriebes umkonfiguriert werden oder eine Neuverteilung oder eine Änderung von Konfigurationsdaten zunächst simuliert werden kann, um mögliche Ungleichverteilungen auf die Speicherplätze zu beseitigen oder Erweiterungen durchzuführen.

Ein Ausführungsbeispiel der Erfindung wird anhand der Figuren 1 bis 3 beschrieben und näher erläutert. Es zeigen:

Fig. 1    die schematische Darstellung eines Mobilfunksystems,

Fig. 2    die Zuordnung von Teilnehmernummern auf Speicherplätze,

Fig. 3    die Struktur eines VLR (Visitor Location Register).

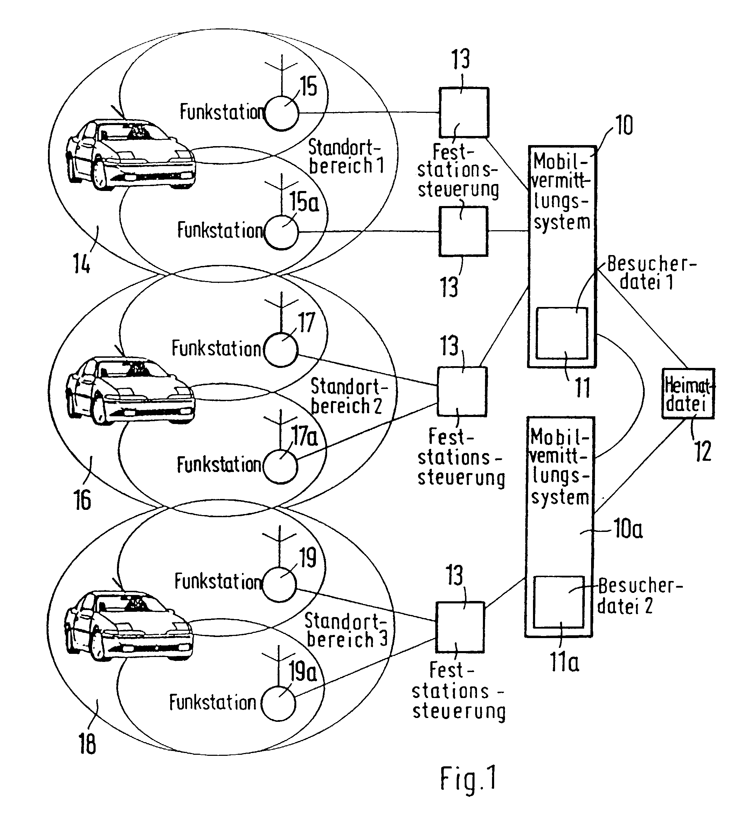

In Fig. 1 sind mit 10 und 10a zwei Mobilfunkvermittlungsstellen MSC gekennzeichnet, die jeweils eine Besucherdatei, mit 11 und 11a gekennzeichnet, enthalten. Die Besucherdateien werden im folgenden mit VLR (Visitors Location Register) abgekürzt. Die Mobilfunkvermittlungsstellen MSC stehen mit einer Heimatdatei HLR (Home Location Register) 12 in Verbindung. Mit dem MSC 10 sind zwei Standortbereiche 14 und 16, mit dem MSC 10a ein Standortbereich 18 verbunden. In den Standortbereichen gibt es mit 15, 15a, 17, 17a, 19 und 19a bezeichnete Funkstationen, die die Verbindung zwischen dem Mobilfunkteilnehmer - hier durch ein Auto dargestellt - und dem Mobilfunksystem herstellen. Die Funkstationen 15 bis 19a sind über Feststationssteuerungen 13 mit den MSCs 10 und 10a verbunden. Auf die Feststationssteuerungen 13 wird nicht näher eingegangen, da sie für das Verständnis der Erfindung nicht wesentlich sind. Bewegt sich ein Mobilfunkteilnehmer in einem Standortbereich, beispielsweise im Standortbereich 16, und hat sein mobiles Telefon eingeschaltet, so empfängt das mobile Telefon ständig eine Standortsbereichskennung, die von der Funkstation 17 oder 17a ausgesandt wird. Fährt der Mobilfunkteilnehmer jetzt in einen anderen Standortbereich, dann eröffnet die Mobilstation eine Standortbereichsupdate-Prozedur. Diese führt beim Wechsel vom MSC 10 zum MSC 10a zu einem Neueintrag des Datensatzes vom alten VLR in das neue VLR, wobei der Datensatz im alten VLR gelöscht wird.

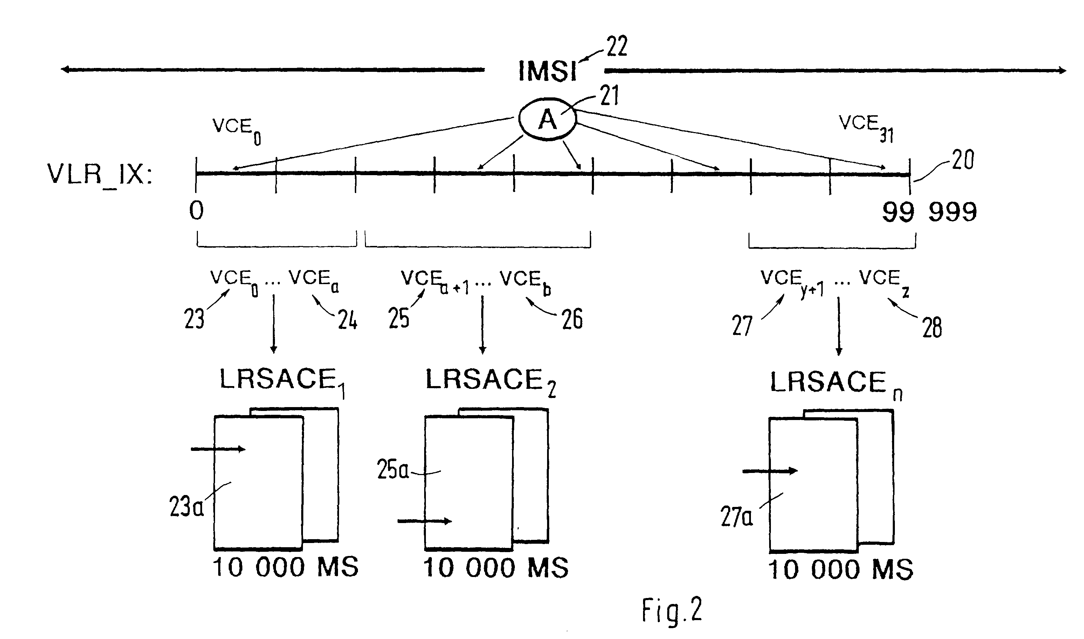

In Fig. 2 ist mit 20 ein Bereich virtueller Indizes bezeichnet, der Werte zwischen 0 und 99 999 annehmen kann. Mit 21 ist ein Algorithmus bezeichnet, der N-stellige Teilnehmernummern 22 IMSI auf den Bereich der virtuellen Indizes zwischen 0 und 99 999 abbildet. Dem Bereich 20 virtueller Indizes sind virtuelle Kontrollelemente 23 bis 28 zugeordnet. Die Einteilung des Bereiches virtueller Indizes 20 in virtuelle Kontrollelemente ist willkürlich, d.h., daß die Zahl virtueller Kontrollelemente je nach Bedarf vergrößert oder verkleinert werden kann. Die virtuellen Kontrollelemente 23 bis 28 sind vermittels einer Konfigurationstabelle logischen Prozessoren LCE 23a bis 27a zugeordnet, die einen bestimmten Bereich des zur Verfügung stehenden Speicherplatzes kontrollieren. Der von den logischen Prozessoren 23a bis 27a verwaltete Speicherplatz ist in sogenannte Pages unterteilt. Aus der Konfigurationstabelle ist ersichtlich, welche virtuellen Kontrollelemente mit welchen logischen Prozessoren verknüpft sind. Damit geht aus der Konfigurationstabelle hervor, welche Pages des Speicherbereiches für die Teilnehmer eines virtuellen Kontrollelementes zur Verfügung steht. Die Größe der Pages ist für alle logischen Kontrollelemente gleich. Sie ist bei der Systemdefinition frei wählbar und kann beispielsweise 1, 5, 10, 12 oder 20 Datensätze umfassen. Ein Packungsfaktor VPF gibt an, wieviele nebeneinander liegende virtuelle Indizes eines virtuellen Kontrollelementes zusammen in eine Page gepackt werden. Durch Variation des Packungsfaktors lassen sich Ungleichverteilungen in den einzelnen virtuellen Kontrollelementen ausgleichen.

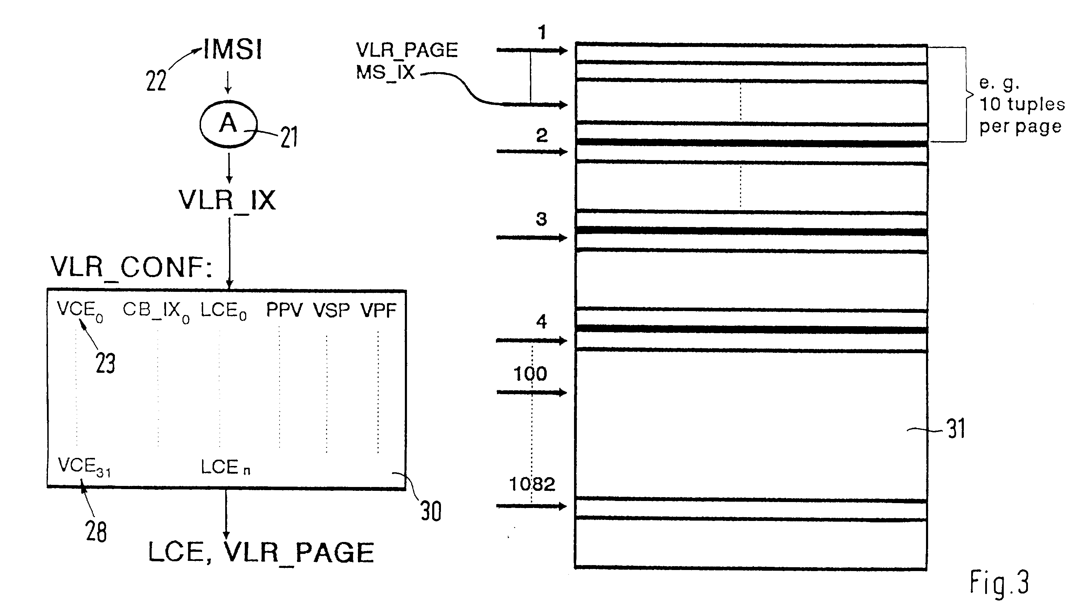

Anhand von Fig. 3 wird die Struktur eines VLR-Speichers erläutert. Im folgenden gilt, daß gleiche Bezugszeichen die gleichen Elemente wie in den Zeichnungen 1 und 2 bezeichnen. 21 ist der bereits aus Fig. 2 bekannte Algorithmus, der der Teilnehmerkennung 22 einen virtuellen Index V_IX zuordnet. In Fig. 3 ist das mit VLR-IX bezeichnet. Die virtuellen Indizes werden den bereits bekannten virtuellen Kontrollelementen 23 bis 28 zugeordnet, die die linke Spalte in einer mit 30 bezeichneten Konfigurationstabelle VLR-Konf darstellen. Die zweite Spalte in Tabelle 30 bezeichnet Basisindizes, aus denen hervorgeht, welcher Index der jeweils erste in einem virtuellen Kontrollelement ist.

Die dritte Spalte in der Tabelle 30 stellt die Zurodnung zwischen den virtuellen Kontrollelementen VCE und logischen Kontrollelementen LCE her. Die vierte Spalte in Tabelle 30 enthält Information über die Zahl der Pages pro virtuellem Kontrollelement. In der fünften Spalte ist Information darüber enthalten, mit welcher Pagenummer ein VCE beginnt. Die sechste und letzte Spalte enthält den VPF, den Packungsfaktor, aus dem die Packungsdichte der Informationen pro Page hervorgeht. Ein VPF = 1 sagt aus, daß benachbarte Indizes V_IX zu verschiedenen Pages gehören. Ein Packungsfaktor = 2 sagt aus, daß zwei benachbarte Indizes zur selben Page gehören, das nächste Paar von Indizes jedoch zur nächsten Page ein Packungsfaktor 3 sagt aus, daß drei benachbarte Indizes zur selben Page gehören, das nächste Triplett jedoch zur nächsten Page. Dieses Bildungsgesetz kann so fortgesetzt werden für vier, fünf usw.. Die Größen VPF, PPV und VSP können für jede VCE individuell gewählt werden. In Fig. 3 auf der rechten Seite ist mit 31 ein Speicherbereich bezeichnet, der insgesamt in 1082 Pages aufgeteilt ist. von denen jede jeweils 10 Datensätze aufnehmen kann.

Der Algorithmus zur Erzeugung der virtuellen Indizes sei anhand eines Beispieles erläutert. Die Teilnehmerkennung IMSI bestehe aus 15 Ziffern D (0) bis D (14). Aufgabe des Algorithmus ist es, diese 15-stelligen Teilnehmerkennungen eindeutig auf 5-stellige virtuelle Indizes abzubilden. Die Ziffern der virtuellen Indizes seien im folgenden mit V0 bis V4 bezeichnet. In einem ersten Schritt wird die 15-stellige Teilnehmerkennung in g Gruppen eingeteilt, wobei jede Ziffer der IMSI nur in einer Gruppe vorkommen darf. Die Anzahl g der Gruppen hängt alleine von der Länge I der Teilnehmernummer und von der gewünschten Größe des Bereiches der virtuellen Indizes ab. Bei 15-stelligen oder kleineren Teilnehmerkennungen reicht eine Gruppe aus. Jede Gruppe kann durch den nachfolgenden Algorithmus in unabhängige V0 ... V4 Werte abgebildet werden. Eine Kombination aus allen 5-Tuppeln V0 ... V4 kann zur Konstruktion des virtuellen Indexbereiches genutzt werden. Das im folgenden dargestellte Schema zeigt, wie die einzelnen Elemente der virtuellen Indizes aus den Ziffern der Teilnehmerkennung berechnet werden. Darin bedeuten

V0 bis V4: die Ziffern der virtuellen Indizes D (0) bis D (14): die Ziffern der Teilnehmerkennung A%10 : A Modulo 10
Eine mit VC bezeichnete Korrekturgröße wird aus allen 15 Ziffern der IMSI berechnet.

$$VC = (D(0)+D(1)+D(2)+D(3)+D(4)+D(5)+D(6)+D(7)+D(8)+D(9)$$

$$+D(10)+D(11)+D(12)+D(13)+D(14))\ \%2$$

$$V0 = (\ 1*(D(9) + D(13) + D(0))$$

$$+2*(D(7) + D(12) + D(2))$$

$$+3*(D(11) + D(14) + D(3))$$

$$+5*(D(10) + D(6) + D(4))$$

$$+7*(D(8) + D(5) + D(1)) + VC)\ \%10$$

$$V1 = (\ 1*(D(10) + D(14) + D(1))$$

$$+2*(D(8) + D(13) + D(3))$$

$$+3*(D(7) + D(5) + D(4))$$

$$+5*(D(11) + D(12) + D(0))$$

$$+7*(D(9) + D(6) + D(2)))\ \%10$$

$$V2 = (\ 1*(D(11) + D(5) + D(2))$$

$$+2*(D(9) + D(14) + D(4))$$

$$+3*(D(8) + D(6) + D(0))$$

$$+5*(D(7) + D(13) + D(1))$$

$$+7*(D(10) + D(12) + D(3)))\ \%10$$

$$V3 = (\ 1*(D(7) + D(6) + D(3))$$

$$+2*(D(10) + D(5) + D(0))$$

$$+3*(D(9) + D(12) + D(1))$$

$$+5*(D(8) + D(14) + D(2))$$

$$+7*(D(11) + D(13) + D(4)))\ \%10$$

$$V4 = (\ 1*(D(8) + D(12) + D(4))$$

$$+2*(D(11) + D(6) + D(1))$$

$$+3*(D(10) + D(13) + D(2))$$

$$+5*(D(9) + D(5) + D(3))$$

$$+7*(D(7) + D(14) + D(0)))\ \%10$$

Der hier wiedergegebene Algorithmus zur Umwandlung der Teilnehmerkennungen in virtuelle Indizes stellt ein Beispiel dar, andere Möglichkeiten sind jedoch denkbar.

**Patentansprüche**

1. Verfahren zum Einordnen oder Auffinden von Teilnehmerdatensätzen in einer Teilnehmerdatenbank, denen eindeutig eine aus N Ziffern bestehende Teilnehmernummer zugeordnet ist, **dadurch gekennzeichnet,** daß

   - jeder Teilnehmernummer mit Hilfe eines Algorithmus ein virtueller Index V_IX zugeordnet wird,
   - jeder einer Teilnehmernummer zugeordnete virtuelle Index V_IX mit Hilfe logischer Prozessoren LCE einem Speicherbereich der Teilnehmerdatenbank zugewiesen wird.

2. Verfahren nach Anspruch 1, dadurch gekennzeichnet, daß der Wertevorrat des virtuellen Indizes V_IX in eine frei wählbare Anzahl von Virtuellen Control Elementen ($VCE_1 ... VCE_K$) unterteilt ist, deren Grenzen durch die Basisindizes VB_IX der $VCE_i$ bestimmt ist, so daß jeder V_IX eindeutig einem $VCE_i$ zuordenbar ist.

3. Verfahren nach Anspruch 2, dadurch gekennzeichnet, daß die $VCE_i$ und deren Basisindizes in einer Konfigurationstabelle abgelegt sind.

4. Verfahren nach einem der Ansprüche 2 und 3, dadurch gekennzeichnet, daß jedem virtuellen Bereich $VCE_i$ ein logischer Prozessor LCE (Logisches Control Element) zugewiesen ist.

5. Verfahren nach Anspruch 4, dadurch gekennzeichnet, daß der einem logischen Prozessor LCE zugeordnete Speicherbereich in Pages aufgeteilt ist, wobei jede Page eine konstante wählbare Anzahl (z.B. 10) von Plätzen für Teilnehmerdatensätze vorsieht.

6. Verfahren nach den Ansprüchen 3 bis 5, dadurch gekennzeichnet, daß jedem virtuellen Bereich $VCE_i$ eine bestimmte Anzahl von Pages und ein Packungs-Faktor VPF zugeordnet ist, der angibt, wieviele nebeneinander liegende virtuelle Indizes V_IX zusammen in eine Page gepackt werden.

7. Verfahren nach den Ansprüchen 3 bis 6, mit dem ein V_IX einer Page in einem LCE zugeordnet wird, dadurch gekennzeichnet, daß ein "überlauf" auf den letzten Speicherplatz der nachfolgenden n (frei wählbar) Pages gestattet wird, falls die algorithmisch zugewiesene Page bereits voll belegt ist.

8. Verfahren nach den Ansprüchen 1 bis 7, gekennzeichnet durch eine Memory-Auslastung von etwa 80%, und ein Datensatz in durchschnittlich 6 Suchschritten gefunden werden kann.

9. Verfahren nach Anspruch 2, dadurch gekennzeichnet, daß die Teilnehmerdatenbank während des Betriebes umkonfiguriert werden kann.

10. Verfahren nach Anspruch 1, dadurch gekennzeichnet, daß der Zugriff auf jeden beliebigen Datensatz der Teilnehmerdatenbank von jeder mit der Teilnehmerdatenbank verbundenen Systemschnittstelle erfolgen kann.

11. Verfahren nach Anspruch 1, dadurch gekennzeichnet, daß der Algorithmus die Teilnehmernummern gleichmäßig auf die virtuellen Indizes V_IX verteilt.

12. Verfahren nach Anspruch 1, dadurch gekennzeichnet, daß die virtuellen Indizes V_IX aus gewichteten Linearkombinationen der N Ziffern der Teilnehmernummer abgeleitet sind.

**Claims**

1. Method of filing or finding subscriber data records in a subscriber data base, to which records an N-digit subscriber number has been unambiguously assigned,
   characterized in that

   - each subscriber number is assigned a virtual index V_IX with the aid of an algorithm,
   - each virtual index V_IX assigned to a subscriber number is allocated to a memory area of the sub-subscriber data base with the aid of logic processors LCE.

2. Method according to Claim 1, characterized in that the supply of values of the virtual index V_IX is subdivided into a freely selectable number of virtual control elements ($VCE_1...VCE_K$) whose limits are determined by the base indices VB-IX of the $VCE_i$s, so that each V_IX is unambiguously assignable to one $VCE_i$.

3. Method according to Claim 2, characterized in that the $VCE_i$ and their base indices are stored in a configuration table.

4. Method according to Claim 2 or 3, characterized in that a logic processor LCE (logic control element) is allocated to each virtual area $VCE_i$.

5. Method according to Claim 4, characterized in that the memory area assigned to a logic processor LCE is divided into pages, each page providing a constant selectable number (e.g., 10) of locations for subscriber data records.

6. Method according to Claims 3 to 5, characterized in that each virtual area $VCE_i$ is assigned a certain number of pages and a packing factor VPF which indicates how many virtual indices V_IX lying side by side can be packed together into one page.

7. Method according to Claims 3 to 6, by which method a V_IX is assigned to a page in an LCE, characterized in that an "overflow" to the last memory location of the subsequent n (freely selectable) pages is permitted if the algorithmically assigned page is already fully occupied.

8. Method according to Claims 1 to 7, characterized by a memory utilization of about 80%, and in that a data record can be found in an average of 6 search steps.

9. Method according to Claim 2, characterized in that the subscriber data base can be reconfigured during operation.

10. Method according to Claim 1, characterized in that any data record of the subscriber data base can be accessed by any system interface connected to the subscriber data base.

11. Method according to Claim 1, characterized in that the algorithm uniformly distributes the subscriber numbers over the virtual indices V_IX.

12. Method according to Claim 1, characterized in that the virtual indices V_IX are derived from weighted linear combinations of the N digits of the subscriber number.

**Revendications**

1. Procédé destiné à classer ou à localiser des articles de données, en particulier des articles de données pour abonnés dans des bases de données d'abonnés, auxquels articles de données a été assigné de manière univoque un numéro d'abonné formé de N chiffres, caractérisé en ce que

   - un index virtuel V_IX est assigné à chaque numéro d'abonné à l'aide d'un algorithme ;
   - à l'aide de processeurs logiques LCE, un espace mémoire dans la base de données des abonnés est alloué à chaque index virtuel V_IX, assigné à un numéro d'abonné.

2. Procédé selon la revendication 1, caractérisé en ce que le stock de valeurs de l'index virtuel V_IX est subdivisé en un nombre librement définissable d'éléments de contrôle virtuels ($VCE_1$ ... $VCE_K$), dont la limite est déterminée par l'index de base VB-IX de $VCE_i$, de telle sorte que chaque V_IX peut être assigné de manière univoque à un $VCE_i$.

3. Procédé selon la revendication 2, caractérisé en ce que le $VCE_i$ et son indice de base sont stockés dans un tableau de configuration.

4. Procédé selon la revendication 2 ou 3, caractérisé en ce qu'un processeur logique LCE (élément de contrôle logique) est affecté à chaque zone virtuelle $VCE_i$.

5. Procédé selon la revendication 4, caractérisé en ce que l'espace mémoire alloué à un processeur logique LCE est subdivisé en pages, chaque page contenant un nombre constant de places à définir (10, par exemple) pour les articles de données pour abonnés.

6. Procédé selon l'une quelconque des revendications 3 à 5, caractérisé en ce qu'à chaque zone virtuelle $VCE_i$ sont affectés un nombre défini de pages et un facteur de compression VPF, lequel indique combien d'index virtuels V_IX, situés côte à côte, sont compactés ensemble dans une page.

7. Procédé selon l'une quelconque des revendications 3 à 6, par lequel un V_IX d'une page est assigné dans un LCE, caractérisé en ce qu'un « débordement » sur le dernier espace mémoire des n (à définir librement) pages suivantes est autorisé, au cas où la page assignée par l'intermédiaire de l'algorithme est déjà pleine.

8. Procédé selon l'une quelconque des revendications 1 à 7, caractérisé par un volume de travail de la mémoire de 80 % environ et par la possibilité de pouvoir localiser un article de données en 6 étapes de recherche en moyenne.

9. Procédé selon la revendication 2, caractérisé en ce que la configuration de la base de données des abonnés peut être modifiée en cours d'exploitation du système.

10. Procédé selon la revendication 1, caractérisé en ce qu'il est possible d'accéder à n'importe quel article de données de la base de données des abonnés à partir de chaque interface du système reliée à la base de données des abonnés.

11. Procédé selon la revendication 1, caractérisé en ce que l'algorithme répartit régulièrement les numéros d'abonnés sur les index virtuels V_IX.

12. Procédé selon la revendication 1, caractérisé en ce que les index virtuels V_IX sont drives de combinaisons linéaires pondérées des N chiffres des numéros d'abonnés.

Fig.1

Fig.2

EP 0 464 425 B1

IMSI

22

A — 21

VLR_IX

VLR_CONF:

VCE$_0$  CB_IX$_0$  LCE$_0$  PPV  VSP  VPF

23

VCE$_{31}$          LCE$_n$

28

30

LCE, VLR_PAGE

1

VLR_PAGE
MS_IX

e. g.
10 tuples
per page

2

3

4

100

1082

31

Fig.3